# EUROPEAN PATENT APPLICATION

(11) **EP 1 944 348 A1**
(43) Date of publication of application: **16.07.2008**
(21) Application number: 08100149.7
(22) Date of filing: 07.01.2008
(51) Int. Cl.: C09K 8/06, C09K 8/16, C09K 8/26, C09K 8/36, E21B 7/20

(54) **Wellbore fluids for casing drilling**

(30) Priority: 12.01.2007 US 884841 P; 27.12.2007 US 965393
(71) Applicant: M-I LLC, Houston, TX 77072 (US)
(72) Inventor: Norman, Monica, 4007 Stavanger (NO); Oakley, Doug, Bradford-on-Avon, Wiltshire BA15 2RR (GB); Prebensen, Ole Iacob, 4614 Kristiansand S (NO); Massam, Jarrod, Aberdeen, Aberdeenshire AB10 6AL (GB)
(74) Representative: Brykman, Georges

(57) **Abstract**

A method of drilling a subterranean hole that includes mixing a base fluid and a micronized weighting agent having a particle size d₉₀ of less than about 50 microns to form a wellbore fluid; providing a drilling assembly that includes a casing as at least a portion of a drill string; and a drill bit attached at the distal end of the drill string; and drilling said subterranean hole with the drilling assembly using the wellbore fluid is disclosed.

## Description

### CROSS-REFERENCE TO RELATED APPLICATIONS

This application, pursuant to 35 U.S.C. § 119(e), claims priority to U.S. Patent Application Serial No. 60/884,841, filed on January 12, 2007, which is herein incorporated by reference in its entirety.

### BACKGROUND OF INVENTION

### Field of the Invention

Embodiments disclosed herein relate generally to wellbore fluids for use in casing drilling applications.

### Background Art

In the drilling of oil and gas wells, a borehole is formed in the earth with a drill bit typically mounted at the end of a string of relatively small diameter tubing or drill string. After a predetermined length of borehole is formed, the bit and drill string are removed from the well, and larger diameter string of casing is inserted to form the wellbore. The casing is used to line the borehole walls and the annular area between the outer surface of the casing and the borehole is filled with cement to help strengthen the wellbore and aid in isolating sections of the wellbore for hydrocarbon production.

To facilitate the drilling, fluid is circulated through the drill string, out the bit and upward in an annular area between the drill string and the wall of the borehole. Common uses for well fluids include: lubrication and cooling of drill bit cutting surfaces while drilling generally or drilling-in (i.e., drilling in a targeted petroliferous formation), transportation of "cuttings" (pieces of formation dislodged by the cutting action of the teeth on a drill bit) to the surface, controlling formation fluid pressure to prevent blowouts, maintaining well stability, suspending solids in the well, minimizing fluid loss into and stabilizing the formation through which the well is being drilled, fracturing the formation in the vicinity of the well, displacing the fluid within the well with another fluid, cleaning the well, testing the well, transmitting hydraulic horsepower to the drill bit, fluid used for emplacing a packer, abandoning the well or preparing the well for abandonment, and otherwise treating the well or the formation.

Drilling with casing ("casing drilling") is a particular method of forming a borehole with a drill bit attached to the same string of tubulars (casing) that will line the borehole. That is, rather than running a drill bit on a smaller diameter drill string, a larger diameter tubing or casing is used as the drill string, thereby simultaneously drilling and casing the hole. Because no separate trip into the wellbore is necessary to emplace a casing, drill time can be reduced by up to 30 percent, eliminating tripping of the drill string, and the problems associated therewith. Thus, casing drilling is especially useful in certain situations where an operator wants to drill and line a borehole as quickly as possible to minimize the time the borehole remains unlined and subject to collapse or the effects of pressure anomalies. Casing drilling operations are described, for example, in U.S. Patent Nos. 6,705,413 and 7,044,241.

While drilling efficiencies may be realized with casing drilling, the method generally provides for a much narrower clearance between the casing tubular and the borehole, as compared to the clearance between a drill string and the borehole, thus restricting the annulus through which wellbore fluids are returned to the surface. The small annular spacing generally leads to increased frictional forces and pressures, which in turn may lead to an elevated equivalent circulation density (ECD). If the ECD of the drilling fluid exceeds the ability of the formation to resist injection, fluid losses typically result. However, due to the small annulus in casing drilling operations, little room is left for conventional ECD reduction devices, and thus, ECD must be controlled by tailoring the rheological properties of the drilling fluid.

In general, drilling fluids should be pumpable under pressure down through strings of drilling pipe, or casing in casing drilling, then through and around the drilling bit head deep in the earth, and then returned back to the earth surface through an annulus between the outside of the drill or casing string and the hole wall. Beyond providing drilling lubrication and efficiency, and retarding wear, drilling fluids should suspend and transport solid particles to the surface for screening out and disposal. In addition, the fluids should be capable of suspending additive weighting agents (to increase specific gravity of the mud), generally finely ground barites (barium sulfate ore), and transport clay and other substances capable of adhering to and coating the borehole surface.

Drilling fluids are generally characterized as thixotropic fluid systems. That is, they exhibit low viscosity when sheared, such as when in circulation (as occurs during pumping or contact with the moving drilling bit). However, when the shearing action is halted, the fluid should be capable of suspending the solids it contains to prevent gravity separation. In addition, when the drilling fluid is under shear conditions and a free-flowing near-liquid, it must retain a sufficiently high enough viscosity to carry all unwanted particulate matter from the bottom of the well bore to the surface. The drilling fluid formulation should also allow the cuttings and other unwanted particulate material to be removed or otherwise settle out from the liquid fraction.

There is an increasing need for drilling fluids having the rheological profiles that enable wells to be drilled by casing drilling more easily. Drilling fluids having tailored rheological properties ensure that cuttings are removed from the wellbore as efficiently and effectively as possible to avoid the formation of cuttings beds in the well which can cause the casing string to become stuck, among other issues. There is also the need from a drilling fluid hydraulics perspective (equivalent circulating density) to reduce the pressures required to circulate the fluid, this helps to avoid exposing the formation to excessive forces that can fracture the formation causing the fluid, and possibly the well, to be lost, especially in casing drilling operations. In addition, an enhanced profile is necessary to prevent settlement or sag, *i.e.,* solids falling out of suspension, of any weighting agents present in the fluid. If settlement or sag occurs, an uneven density profile within the circulating fluid system, and thus well control (gas/fluid influx) and wellbore stability problems (caving/fractures), may result.

To obtain the fluid characteristics required to meet these challenges, the fluid must be easy to pump so only a small amount of pressure is required to force it through restrictions in the circulating fluid system, such as bit nozzles, down-hole tools, or narrow wellbore annuli. In other words, the fluid must have the lowest possible viscosity under high shear conditions. Conversely, in zones of the well where the area for fluid flow is large and the velocity of the fluid is slow or where there are low shear conditions, the viscosity of the fluid needs to be great enough in order to suspend and transport the drilled cuttings. The need for a sufficient viscosity also applies to the periods when the fluid is left static in the hole, where both cuttings and weighting materials need to be kept suspended to prevent settlement. However, the viscosity of the fluid should not continue to increase under static conditions to unacceptable levels. Otherwise, when the fluid needs to be circulated again, excessive pressures may result that can fracture the formation or there may be a loss in drill time if the force required to regain a fully circulating fluid system is beyond the limits of the pumps.

The sedimentation or sag of particulate weighting agents within a drilling fluid becomes more critical in wellbores drilled at high angles from the vertical, in that a sag of, for example, one inch (2.54 cm) can result in a continuous column of reduced density fluid along the upper portion of the wellbore wall. Such high angle wells are frequently drilled over large distances in order to access, for example, remote portions of an oil reservoir. In such instances it is important to minimize a drilling fluid's plastic viscosity in order to reduce the pressure losses over the borehole length. At the same time, a sufficiently high fluid density also should be maintained to counterbalance wellbore fluid ingress and/or a well control incident (blow out). Further, the issues of sag become increasingly important to avoid settling out of the particulate weighting agents on the low side of the wellbore, as well as differential sticking of the casing.

Being able to also formulate a drilling fluid having a high density and a low plastic viscosity is important in deep high pressure wells where high-density wellbore fluids are required. High viscosities can result in an increase in pressure at the bottom of the hole under pumping conditions. Increases in ECD, as mentioned above, can result in opening fractures in the formation, and serious losses of the wellbore fluid into the fractured formation. Further, the stability of the suspension is also important in order to maintain the hydrostatic head to avoid a blow out. The goal of high-density fluids with low viscosity plus minimal sag of weighting material continues to be a challenge.

Thus, one requirement of these wellbore fluid formulations is that the additives therein form a stable suspension and do not readily settle out. A second requirement is that the suspension exhibits a tailored viscosity and controlled ECD in order to facilitate pumping and to minimize the generation of high pressures, while also preventing settlement or sag. Finally, the wellbore fluid slurry should also exhibit low fluid loss.

Accordingly, there exists a continuing need for wellbore fluids that control fluid density while simultaneously providing improved suspension stability and minimizing both fluid loss and increases in viscosity, and in particular, fluids that may be used in casing drilling operations.

### SUMMARY OF INVENTION

In one aspect, embodiments disclosed herein relate to a method of drilling a subterranean hole that includes mixing a base fluid and a micronized weighting agent having a particle size d₉₀ of less than about 50 microns to form a wellbore fluid; providing a drilling assembly that includes a casing as at least a portion of a drill string; and a drill bit attached at the distal end of the drill string; and drilling said subterranean hole with the drilling assembly using the wellbore fluid.

In another aspect, embodiments disclosed herein relate to a method of drilling a subterranean hole that includes mixing an oleaginous fluid, a non-oleaginous fluid, and a micronized weighting agent having a particle size d₉₀ of less than about 50 microns to form an invert emulsion drilling fluid; providing a drilling assembly that includes a casing as at least a portion of a drill string; and a drill bit attached at the distal end of the drill string; and drilling said subterranean hole with the drilling assembly using the invert emulsion drilling fluid.

In yet another aspect, embodiments disclosed herein relate to a method of drilling a subterranean hole that includes mixing an aqueous fluid and a micronized weighting agent having a particle size d₉₀ of less than about 50 microns to form a water-based wellbore fluid; providing a drilling assembly that includes a casing as at least a portion of a drill string; and a drill bit attached at the distal end of the drill string; and drilling said subterranean hole with the drilling assembly using the water-based wellbore fluid.

Other aspects and advantages of the invention will be apparent from the following description and the appended claims.

### BRIEF DESCRIPTION OF DRAWINGS

FIGS. 1A-B shows a schematic of a conventional drilling system.

FIG. 2 shows a schematic of a casing drilling system in accordance with one embodiment of the present disclosure.

### DETAILED DESCRIPTION

In one aspect, embodiments disclosed herein relate to the use of micronized weighting agents in wellbore fluids used in casing drilling operations.

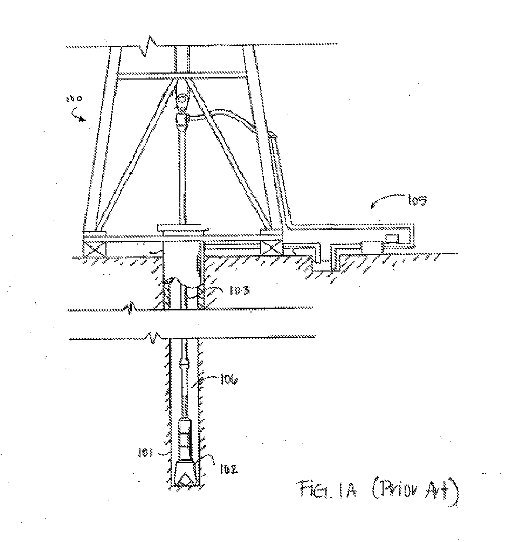

Referring to FIGS. 1A-B, a conventional drilling system is shown. In drilling system 100, a borehole 101 is formed by a drill bit 102 attached to the end of drill string 103. A mud circulation system 105 pumps wellbore fluid 104 through drill string 103 and out openings in bit 102. The fluid 104 returns loaded with drill cuttings through the annulus 106 between the walls of the borehole 101 and drill string 103.

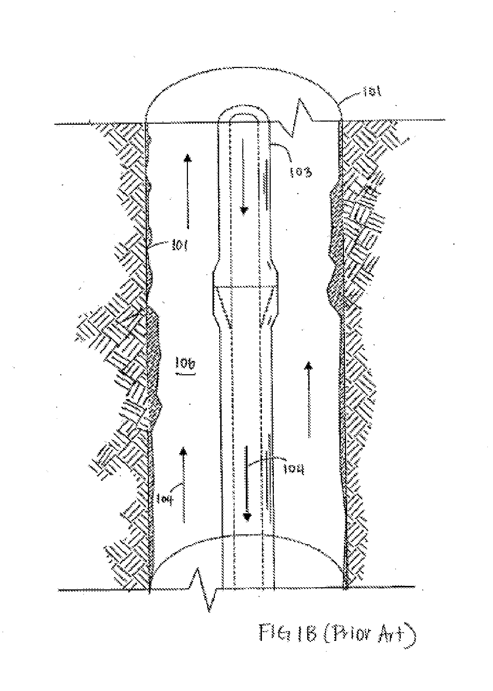

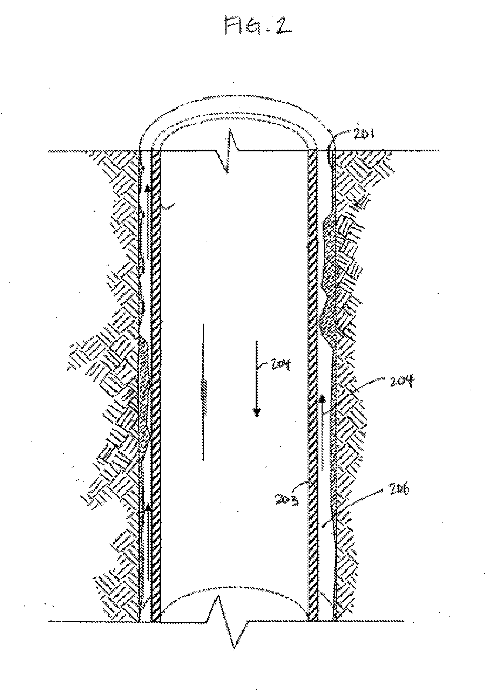

Referring to FIG. 2, a casing drilling operation of the present disclosure is shown. As shown in FIG. 2, at least a portion of drill string 103 of FIG. 1 is replaced by casing string 203. That is, a borehole 201 is formed by a drill bit (not shown) attached to the end of a casing string 203. Wellbore fluid 204 pumps through casing string 203 and returns loaded with drill cuttings through annulus 206 between walls of the borehole 201 and the casing string 203. The larger diameter of casing string 203, as compared to drill string 103, narrows the width of the annulus formed between the casing 203 and the wall of the borehole 201 through which wellbore fluid 204 flows to the surface.

According to various embodiments, the wellbore fluids of the present disclosure may be used in casing drilling operations, where casing string is used as at least a portion of the "drill string" in the formation of a borehole. In one embodiment, the wellbore fluid may include a base fluid and a micornized weighting agent.

Micronized Weighting Agent

Weighting agents used in embodiments disclosed herein may include a variety of compounds known to those of skill in the art. In a particular embodiment, the weighting agent may be selected from materials including, for example, barium sulphate (barite), calcium carbonate, dolomite, ilmenite, hematite, olivine, siderite, strontium sulphate, hausmannite, and other minerals such as other metal carbonates and oxides. In some embodiments, these weighting agents may be chemically modified. One having ordinary skill in the art would recognize that selection of a particular material may depend largely on the density of the material, as the lowest wellbore fluid viscosity at any particular density is typically obtained by using the highest density particles. However, other considerations may influence the choice of product, such as cost, local availability, the power required for grinding, and whether the residual solids or filter cake may be readily removed from the well.

In one embodiment, the weighting agent may be a micronized weighting agent having a d₉₀ of ranging from 1 to 25 microns and a d₅₀ ranging from 0.5 to 10 microns in other embodiments. In another embodiment, the micronized weighting agent includes particles having a d₉₀ ranging from 2 to 8 microns and a d₅₀ ranging from 0.5 to 4 microns. In various other embodiments, the micronized weighting agent includes particles having a d₉₀ of about 50 microns or less, 25 microns or less, 15 microns or less, 10 microns or less, or 5 microns or less. Particle size measurements, including particle size d₅₀ and d₉₀, may be performed using laser diffractometry or other methods known in the art. The d₅₀ (d₉₀) is a value on the distribution such that 50% (90%) of the particles have a particle size of this value or less.

One of ordinary skill in the art would recognize that, depending on the sizing technique, the weighting agent may have a particle size distribution other than a monomodal distribution. That is, the weighting agent may have a particle size distribution that, in various embodiments, may be monomodal, which may or may not be Gaussian, bimodal, or polymodal.

The use of sized weighting agents has been disclosed in U.S. Patent Application Publication No. 20050277553, assigned to the assignee of the current application, and herein incorporated by reference. Particles having these size distributions may be obtained by several means. For example, sized particles, such as a suitable barite product having similar particle size distributions as disclosed herein, may be commercially purchased. A coarser ground material may be obtained, and the material may be further ground by any known technique to the desired particle size. Such techniques include jet-milling, high performance dry milling techniques, or any other technique that is known in the art generally for milling powdered products. In one embodiment, appropriately sized particles of barite may be selectively removed from a product stream of a conventional barite grinding plant, which may include selectively removing the fines from a conventional API barite grinding operation. Fines are often considered a by-product of the grinding process, and conventionally these materials are blended with courser materials to achieve API grade barite. However, in accordance with the present disclosure, these by-product fines may be further processed via an air classifier to achieve the particle size distributions disclosed herein. In yet another embodiment, the micronized weighting agents may be formed by chemical precipitation. Such precipitated products may be used alone or in combination with mechanically milled products.

In one embodiment, the weighting agent may be a coated weighting agent. In some embodiments, the weighting agent may be coated by a wet coating process or a dry coating process. The coated weighting agent, in some embodiments, may be coated with a dispersant by a dry blending process, such as disclosed in U.S. Patent Application Serial No. 60/825,156, filed September 11, 2006, assigned to the assignee of the present application and herein incorporated by reference. The resulting coated weighting agent may be added in new drilling fluid formulations or added to existing formulations. The term "dry blending" refers to a process in which the weighting agent is mixed and coated with a dispersant in the absence of a solvent. The coated weighting agent, in other embodiments, may be coated with a dispersant in the presence of solvent generating colloidal coated particles, such as disclosed in U.S. Patent Application Publication No. 20040127366, assigned to the assignee of the present application, and herein incorporated by reference. As used herein, "micronized weighting agent" refers to weighting agents having particle size distribution reduced below conventional API specified distribution. Finally, one skilled in the art would recognize that the weighting agent may be dry blended with the dispersant in a comminution process (such as grinding) or by other means, such as thermal desorption, for example.

Wellbore Fluid Formulations.

In accordance with one embodiment, the micronized weighting agent may be used in a wellbore fluid formulation. The wellbore fluid may be a water-based fluid, an invert emulsion, or an oil-based fluid.

Water-based wellbore fluids may have an aqueous fluid as the base fluid and a micronized weighting agent. The aqueous fluid may include at least one of fresh water, sea water, brine, mixtures of water and water-soluble organic compounds and mixtures thereof. For example, the aqueous fluid may be formulated with mixtures of desired salts in fresh water. Such salts may include, but are not limited to alkali metal chlorides, hydroxides, or carboxylates, for example. In various embodiments of the drilling fluid disclosed herein, the brine may include seawater, aqueous solutions wherein the salt concentration is less than that of sea water, or aqueous solutions wherein the salt concentration is greater than that of sea water. Salts that may be found in seawater include, but are not limited to, sodium, calcium, sulfur, aluminum, magnesium, potassium, strontium, silicon, lithium, and phosphorus salts of chlorides, bromides, carbonates, iodides, chlorates, bromates, formates, nitrates, oxides, and fluorides. Salts that may be incorporated in a brine include any one or more of those present in natural seawater or any other organic or inorganic dissolved salts. Additionally, brines that may be used in the drilling fluids disclosed herein may be natural or synthetic, with synthetic brines tending to be much simpler in constitution. In one embodiment, the density of the drilling fluid may be controlled by increasing the salt concentration in the brine (up to saturation). In a particular embodiment, a brine may include halide or carboxylate salts of mono- or divalent cations of metals, such as cesium, potassium, calcium, zinc, and/or sodium.

The oil-based/invert emulsion wellbore fluids may include an oleaginous continuous phase, a non-oleaginous discontinuous phase, and a micronized weighting agent. One of ordinary skill in the art would appreciate that the micronized weighting agents described above may be modified in accordance with the desired application. For example, modifications may include the hydrophilic/hydrophobic nature of the dispersant.

The oleaginous fluid may be a liquid, more preferably a natural or synthetic oil, and more preferably the oleaginous fluid is selected from the group including diesel oil; mineral oil; a synthetic oil, such as hydrogenated and unhydrogenated olefins including polyalpha olefins, linear and branch olefins and the like, polydiorganosiloxanes, siloxanes, or organosiloxanes, esters of fatty acids, specifically straight chain, branched and cyclical alkyl ethers of fatty acids; similar compounds known to one of skill in the art; and mixtures thereof. The concentration of the oleaginous fluid should be sufficient so that an invert emulsion forms and may be less than about 99% by volume of the invert emulsion. In one embodiment, the amount of oleaginous fluid is from about 30% to about 95% by volume and more preferably about 40% to about 90% by volume of the invert emulsion fluid. The oleaginous fluid, in one embodiment, may include at least 5% by volume of a material selected from the group including esters, ethers, acetals, dialkylcarbonates, hydrocarbons, and combinations thereof.

The non-oleaginous fluid used in the formulation of the invert emulsion fluid disclosed herein is a liquid and may be an aqueous liquid. In one embodiment, the non-oleaginous liquid may be selected from the group including sea water, a brine containing organic and/or inorganic dissolved salts, liquids containing water-miscible organic compounds, and combinations thereof. The amount of the non-oleaginous fluid is typically less than the theoretical limit needed for forming an invert emulsion. Thus, in one embodiment, the amount of non-oleaginous fluid is less that about 70% by volume, and preferably from about 1% to about 70% by volume. In another embodiment, the non-oleaginous fluid is preferably from about 5% to about 60% by volume of the invert emulsion fluid. The fluid phase may include either an aqueous fluid or an oleaginous fluid, or mixtures thereof. In a particular embodiment, coated barite or other micronized weighting agents may be included in a wellbore fluid having an aqueous fluid that includes at least one of fresh water, sea water, brine, and combinations thereof

Conventional methods can be used to prepare the drilling fluids disclosed herein in a manner analogous to those normally used, to prepare conventional water- and oil-based drilling fluids. In one embodiment, a desired quantity of water-based fluid and a suitable amount of one or more micronized weighting agents, as described above, are mixed together and the remaining components of the drilling fluid added sequentially with continuous mixing. In another embodiment, a desired quantity of oleaginous fluid such as a base oil, a non-oleaginous fluid, and a suitable amount of one or more micronized weighting agents are mixed together and the remaining components are added sequentially with continuous mixing. An invert emulsion may be formed by vigorously agitating, mixing, or shearing the oleaginous fluid and the non-oleaginous fluid.

Other additives that may be included in the wellbore fluids disclosed herein include, for example, wetting agents, organophilic clays, viscosifiers, fluid loss control agents, surfactants, dispersants, interfacial tension reducers, pH buffers, mutual solvents, thinners, thinning agents, and cleaning agents. The addition of such agents should be well known to one of ordinary skill in the art of formulating drilling fluids and muds.

EXAMPLES

One field example where such an invert emulsion drilling fluid was used for a casing drilling application included a barite weighting agent with a d₉₀ of <5 microns. Table 1 below shows the fluid formulation.

**Table 1.**

| Component | Quantity |
|---|---|
| Base Fluid | 0.42-0.195 bbl |
| Drillwater | 0.18-0.12 bbl |
| CaCl₂ | 15.43 lb/bbl |
| Organophilic clay | 4.850 lb/bbl |
| EMUL HT^{™} Emulsifier | 17.638 lb/bbl |
| VERSATROL^{®} Fluid Loss Reducer | 4.189 lb/bbl |
| Barite (d₉₀ of<5 microns) | 0.582 to 0.300 bbl |

A casing string where the outside diameter was 10¾" was used which had a 12¾" drilling bit, which meant the annular gap between the casing and wellbore was 1" and significantly smaller than conventionally drilled wellbores of this diameter. The drilling fluid density was 11.0 to 11.5 lb/gal (1,320 to 1,380 kg/m³). The plastic viscosity of the drilling fluid varied between 14 and 19 cps (measured on a Fann 35 Rheometer at 50 °C) and the 6 rpm reading was less than 4 units. Drilling fluids with conventional weighting agents would require a 6 rpm value of>10 Fann units. The ECD of the micronised weighting fluid at a flow rate of 400 to 430 gal/min was 11.9 to 12.2 lb/gal (1,430 to 1,460 kg/m³) which was significantly lower than a conventional fluid of 12.8 to 12.9 lb/gal (1,530 to 1,549 kg/m³).

A second casing drilling application also used barite as the weighting agent which had a d90 of<5 microns. In this case, the outside casing diameter was 7¾" with a 9-7/8" drill bit. Drilling fluid density was 14.2 lb/gal (1,705 kg/m³) and the plastic viscosity was 12 to 19 cps (measured on a Fann 35 Rheometer at 50 °C) and the 6 rpm reading was less than 4 units.

Advantageously, embodiments of the present disclosure provide for one or more of the following: reduced risk of weighting agent sag or settlement; improved ability to formulate thin fluids; improved ECD control; improved downhole tool performance; improved cement job quality. In casing drilling, the reduction in annular space generally leads to increased ECD. The fluids of the present disclosure may possess rheological properties such that increases in viscosity (and thus ECD) can be minimized while also allowing for reduction in sag and particle settlement. Further, by controlling ECD, bottomhole pressures, and thus, wellbore stability, may be controlling, and torque, drag, and risk of differential sticking, may be reduced.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method of drilling a subterranean hole, comprising:
mixing a base fluid and a micronized weighting agent having a particle size d₉₀ of less than about 50 microns to form a wellbore fluid;
providing a drilling assembly comprising:
a casing as at least a portion of a drill string; and
a drill bit attached at the distal end of the drill string; and
drilling said subterranean hole with the drilling assembly using the wellbore fluid.

2. The method of claim 1, wherein the micronized weighting agent is at least one selected from barite, calcium carbonate, dolomite, ilmenite, hematite, olivine, siderite, hausmannite, and strontium sulfate.

3. The method of claim 1, wherein the micronized weighting agent comprises a coating thereon.

4. The method of claim 3, wherein the dispersant comprises at least one selected from oleic acid, polybasic fatty acids, alkylbenzene sulfonic acids, alkane sulfonic acids, linear alpa olefins sulfonic acid, alkaline earth metal salts thereof, and phospholipids.

5. The method of claim 3, wherein the dispersant comprises polyacrylate esters.

6. The method of claim 5, wherein the polyacrylate ester is at least one selected from polymers of stearyl methacrylate, butylacrylate, and acrylic acid.

7. The method of claim 3, wherein the micronized weighting agent comprises colloidal particles having a coating thereon.

8. The method of claim 1, wherein the micronized weighting agent has a particle size d₉₀ of less than about 10 microns.

9. The method of claim 4, wherein the micronized weighting agent has a particle size d₉₀ of less than about 5 microns.

10. The method of claim 1, wherein the base fluid comprises at least one of an oleaginous fluid and a non-oleaginous fluid.

11. A method of drilling a subterranean hole, comprising:
mixing an oleaginous fluid, a non-oleaginous fluid, and a micronized weighting agent having a particle size d₉₀ of less than about 50 microns to form an invert emulsion drilling fluid;
providing a drilling assembly comprising:
a casing as at least a portion of a drill string; and
a drill bit attached at the distal end of the drill string; and
drilling said subterranean hole with the drilling assembly using the invert emulsion drilling fluid.

12. The method of claim 11, wherein the oleaginous fluid is selected from the group consisting of diesel oil, mineral oil, synthetic oil such as polyolefins or isomerized polyolefins, ester oils, glycerides of fatty acids, aliphatic esters, aliphatic ethers, aliphatic acetals, and combinations thereof.

13. The method of claim 11, wherein the non-oleaginous fluid is selected from the group consisting of fresh water, seawater, brine containing inorganic or organic dissolved salts, aqueous solutions containing water-miscible organic compounds and combinations thereof.

14. The method of claim 11, wherein the micronized weighting agent is at least one selected from barite, calcium carbonate, dolomite, ilmenite, hematite, olivine, siderite, hausmannite, and strontium sulfate.

15. The method of claim 11, wherein the micronized weighting agent has a particle size d₉₀ of less than about 10 microns.

16. The method of claim 15, wherein the micronized weighting agent has a particle size d₉₀ of less than about 5 microns.

17. A method of drilling a subterranean hole, comprising:
mixing an aqueous fluid and a micronized weighting agent having a particle size d₉₀ of less than about 50 microns to form a water-based wellbore fluid;
providing a drilling assembly comprising:
a casing as at least a portion of a drill string; and
a drill bit attached at the distal end of the drill string; and
drilling said subterranean hole with the drilling assembly using the water-based wellbore fluid.

18. The method of claim 17, wherein the aqueous fluid is selected from the group consisting of least one of fresh water, sea water, brine, mixtures of water and water-soluble organic compounds and mixtures thereof.

19. The method of claim 17, wherein the micronized weighting agent is at least one selected from barite, calcium carbonate, dolomite, ilmenite, hematite, olivine, siderite, hausmannite, and strontium sulfate.

20. The method of claim 17, wherein the micronized weighting agent has a particle size d₉₀ of less than about 10 microns.

21. The method of claim 20, wherein the micronized weighting agent has a particle size d₉₀ of less than about 5 microns.
